# EUROPEAN PATENT APPLICATION

(11) **EP 4 378 644 A1**
(43) Date of publication of application: **05.06.2024**
(21) Application number: 22849405.0
(22) Date of filing: 22.07.2022
(51) Int. Cl.: B25J 19/06, B25J 5/00

(54) **SAFETY DEVICE, ROBOT SYSTEM, AND CONTROL METHOD**

(30) Priority: 28.07.2021 JP 2021123295
(71) Applicant: KAWASAKI JUKOGYO KABUSHIKI KAISHA, Kobe-shi, Hyogo 650-8670 (JP)
(72) Inventor: SAKAI, Ryouta, Kobe-shi, Hyogo 6508670 (JP); NAGAHIRO, Ippei, Kobe-shi, Hyogo 6508670 (JP); YOSHIDA, Masataka, Kobe-shi, Hyogo 6508670 (JP)
(74) Representative: Müller-Boré & Partner Patentanwälte PartG mbB
(86) International application number: PCT/JP2022/028531
(87) International publication number: WO 2023/008343

(57) **Abstract**

A safety device 50 is disposed in a robot system 10 having an AGV 20 (travel device) and a robot 40 disposed on the AGV 20. The safety device 50 includes laser sensors 52a, 52b attached to the AGV 20, set with predetermined detection areas, and detecting an object present in the predetermined detection areas, and a movement restrainer 106 restraining movement of the AGV 20 and the robot 40 when the laser sensor 52a, 52b detects the presence of the object in the predetermined detection area. The laser sensor 52a, 52b changes the predetermined detection area based on an ambient signal regarding the periphery of the AGV 20 and the robot 40 from the outside.

## Description

### FIELD

The technique disclosed here relates to a safety device, a robot system, and a control method.

### BACKGROUND

Conventionally, a safety device for a travel device and a robot disposed on the travel device has been known, and for example, is disclosed in Patent Document 1.

In the safety device of Patent Document 1, the reflectance of a robot with a higher priority is set higher than the reflectance of a robot with a lower priority. With this configuration, a sensing signal projected from the robot with the lower priority is reflected on the robot with the higher priority, and is received by the robot with the lower priority with a sufficient intensity. On the other hand, a sensing signal projected from the robot with the higher priority is reflected on the robot with the lower priority, and is received by the robot with the higher priority with an insufficient intensity. With the above-described configuration, the safety device of Patent Document 1 allows the robot with the higher priority to perform a work on a preferential basis.

### CITATION LIST

### PATENT DOCUMENT

Patent Document 1: Japanese Unexamined Patent Application Publication No. 9-38891

### SUMMARY OF THE INVENTION

However, in the safety device as described in Patent Document 1, there is a probability that it is difficult for, e.g., the robot to properly perform a predetermined work. That is, in a case where the detection area of the safety device overlaps with a work area where, e.g., a robot work shelf or table is present, the safety device detects, e.g., the work shelf, and, e.g., the robot is decelerated or stopped unnecessarily.

The technique disclosed here has been made in view of the above-described points, and an object thereof is to provide a safety device, a robot system, and a control method allowing a travel device and a robot to properly perform a predetermined work.

The safety device disclosed here is disposed in a robot system having a travel device and a robot disposed on the travel device. The safety device includes a first sensor and a movement restrainer. The first sensor is attached to at least one of the travel device or the robot, is set with a predetermined detection area, and detects an object present in the predetermined detection area. The movement restrainer restrains movement of at least one of the travel device or the robot when the first sensor detects the presence of the object in the predetermined detection area. The first sensor changes the predetermined detection area based on an ambient signal regarding the periphery of the travel device and the robot from the outside. Here, the "periphery of the travel device and the robot" means an object and a person surrounding the travel device and the robot.

The robot system disclosed here includes a travel device, a robot disposed on the travel device, and the above-described safety device.

The control method disclosed here is a method for controlling movement of a travel device and a robot disposed on the travel device in a robot system including the travel device, the robot, and a first sensor attached to at least one of the travel device or the robot, set with a predetermined detection area, and detecting an object present in the predetermined detection area. The control method includes setting the predetermined detection area of the first sensor, changing the predetermined detection area of the first sensor based on an ambient signal regarding the periphery of the travel device and the robot, and restraining movement of at least one of the travel device or the robot when the first sensor detects the presence of the object in the predetermined detection area.

According to the safety device, the travel device and the robot can properly perform the predetermined work.

According to the robot system, the travel device and the robot can properly perform the predetermined work.

According to the control method, the travel device and the robot can properly perform the predetermined work.

### BRIEF DESCRIPTION OF THE DRAWINGS

[FIG. 1] FIG. 1 is a schematic view showing a state in which a robot system is applied to a work site.
[FIG. 2] FIG. 2 is a perspective view showing an entire configuration of the robot system.
[FIG. 3] FIG. 3 is a side view showing a main configuration of the robot system.
[FIG. 4] FIG. 4 is a front view of part of an AGV from the front.
[FIG. 5] FIG. 5 is a block diagram showing a control system of the robot system.
[FIG. 6] FIG. 6 is a schematic view showing a predetermined detectable area set in a safety device.
[FIG. 7] FIG. 7 is a flowchart showing a control method.
[FIGS. 8(A) and 8(B)] FIGS. 8(A) and 8(B) are schematic views showing a predetermined detection area set in the safety device, and FIG. 8(A) is a schematic view showing a first detection area and FIG. 8(B) is a schematic view showing a second detection area.
[FIG. 9] FIG. 9 is a schematic view showing a third detection area set in the safety device.
[FIG. 10] FIG. 10 is a schematic view showing a fourth detection area set in the safety device.
[FIG. 11] FIG. 11 is a schematic view showing a fifth detection area set in the safety device.
[FIG. 12] FIG. 12 is a schematic view showing a sixth detection area set in the safety device.
[FIG. 13] FIG. 13 is a schematic view showing a seventh detection area set in the safety device.
[FIG. 14] FIG. 14 is a schematic view showing an eighth detection area set in a safety device according to another embodiment.

### DESCRIPTION OF EMBODIMENTS

Hereinafter, an exemplary embodiment will be described in detail based on the drawings.

### <Robot System 10>

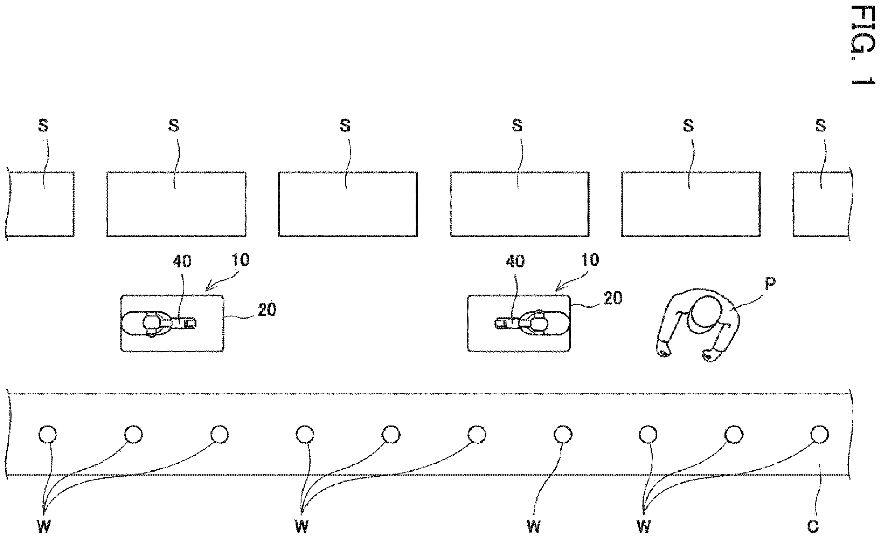

FIG. 1 is a schematic view showing a state in which a robot system 10 is applied to a work site. As shown in FIG. 1, the robot system 10 of the present embodiment is used for delivering workpieces W sequentially delivered by a conveyer C to any of shelves S aligned parallel with the direction of delivery by the conveyer C. The robot system 10 is of a self-propelled type. In the present embodiment, two robot systems 10 are located between the conveyer C and the shelves S in order to perform the above-described delivery work. Note that a worker P is located in the vicinity of the two robot systems 10 in order to perform the same delivery work as that performed by the two robot systems 10.

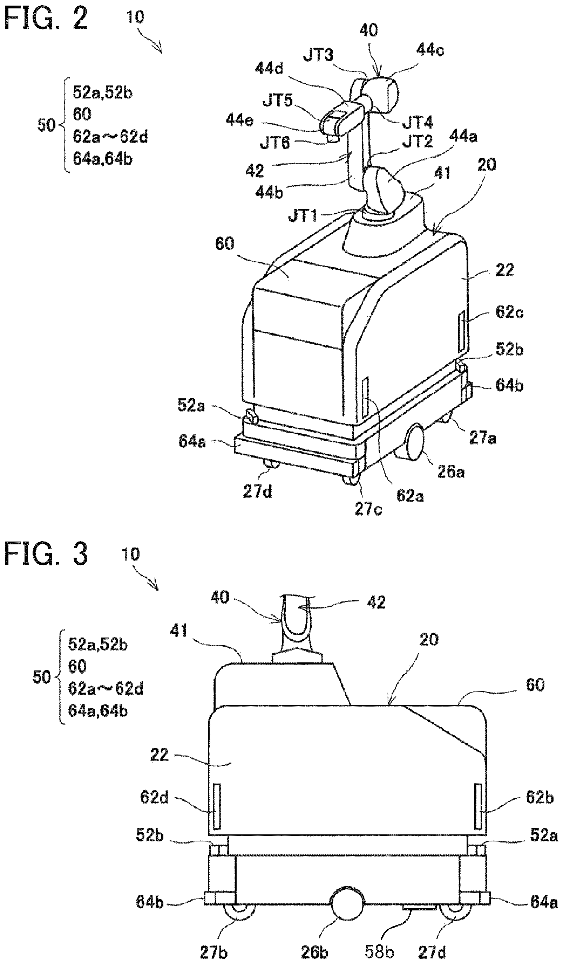

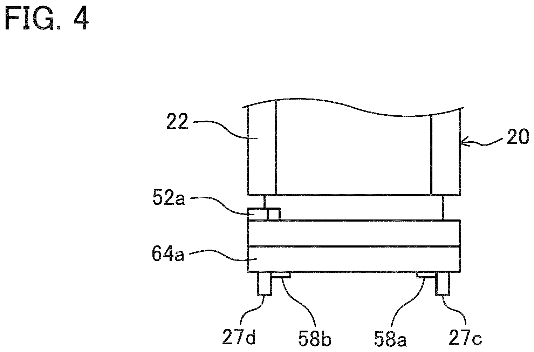

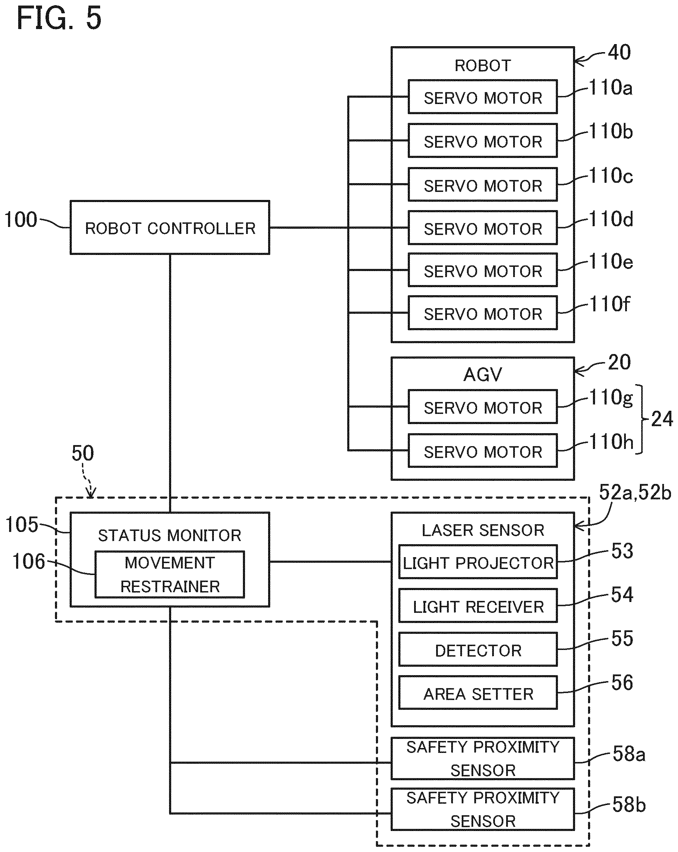

FIG. 2 is a perspective view showing an entire configuration of the robot system 10. FIG. 3 is a side view showing a main configuration of the robot system 10. FIG. 4 is a front view showing part of an automated guided vehicle (AGV) 20 from the front. The robot system 10 includes the AGV 20, a robot 40 disposed on the upper surface of the AGV 20, and a robot controller 100 (see FIG. 5). Further, the robot system 10 includes a safety device 50 disposed for the AGV 20 and the robot 40.

### <AGV 20>

The AGV 20 is one example of a travel device, and is a self-propelled device. The AGV 20 has a rectangular parallelepiped housing 22, a driver 24 (see FIG. 5) disposed in the housing 22, two drive wheels 26a, 26b to be driven by the driver 24, and four wheels 27a to 27d not connected to the driver 24.

The drive wheel 26a is disposed at the center of a left edge portion of the bottom of the AGV 20, and is driven by a servo motor 110g (see FIG. 5) of the driver 24. Moreover, the drive wheel 26b is disposed at the center of a right edge portion of the bottom of the AGV 20, and is driven by a servo motor 110h (see FIG. 5) of the driver 24. For example, the AGV 20 differentiates the rotating speeds of the drive wheels 26a, 26b from each other, thereby spinning the robot system 10 and turning the robot system 10 right and left. The four wheels 27a to 27d are each disposed at corner portions of the bottom of the AGV 20. The four wheels 27a to 27d may be omnidirectional casters.

### <Robot 40>

The robot 40 includes a base 41 fixed to the upper surface of the housing 22 of the AGV 20, a robot arm 42 having a base end coupled to the base 41, and an end effector (not shown) disposed at the tip end of the robot arm 42. In the present embodiment, the robot 40 is a so-called vertical articulated robot.

As shown in FIG. 2, the robot arm 42 has six articulated shafts JT1 to JT6 and five links 44a to 44e sequentially coupled to each other through the articulated shafts JT1 to JT6. Note that the articulated shafts JT1 to JT6 are driven by servo motors 110a to 110f (see FIG. 5).

The articulated shaft JT1 couples the base 41 and the base end of the link 44a to each other such that the link 44a rotates about an axis extending in the vertical direction. Rotation movement of the link 44a relative to the base 41 is performed by the servo motor 110a (see FIG. 5). The articulated shaft JT2 couples the tip end of the link 44a and the base end of the link 44b to each other such that the link 44b rotates about an axis extending in the horizontal direction. Rotation movement of the link 44b relative to the link 44a is performed by the servo motor 110b (see FIG. 5). The articulated shaft JT3 couples the tip end of the link 44b and the base end of the link 44c to each other such that the link 44c rotates about an axis extending in the horizontal direction. Rotation movement of the link 44c relative to the link 44b is performed by the servo motor 110c (see FIG. 5).

The articulated shaft JT4 couples the tip end of the link 44c and the base end of the link 44d to each other such that the link 44d rotates about an axis extending in the longitudinal direction of the link 44c. Rotation movement of the link 44d relative to the link 44c is performed by the servo motor 110d (see FIG. 5). The articulated shaft JT5 couples the tip end of the link 44d and the base end of the link 44e to each other such that the link 44e rotates about an axis extending in a direction perpendicular to the longitudinal direction of the link 44d. Rotation movement of the link 44e relative to the link 44d is performed by the servo motor 110e (see FIG. 5). The articulated shaft JT6 couples the tip end of the link 44e and the base end of the end effector to each other such that the end effector torsionally rotates. Rotation movement of the end effector relative to the link 44e is performed by the servo motor 110f (see FIG. 5).

### <Robot Controller 100>

FIG. 5 is a block diagram showing a control system of the robot system 10. The robot controller 100 controls movement of the AGV 20 and the robot 40.

Specifically, the robot controller 100 can perform servo control on movement of the robot arm 42. Moreover, the robot controller 100 can perform servo control on movement of the end effector with the end effect (not shown), which is disposed at the tip end of the robot arm 42, as an external axis. Further, the robot controller 100 can perform servo control on movement of the drive wheels 26a, 26b with the drive wheels 26a, 26b as external axes.

Note that the robot controller 100 may control movement of a buzzer 60, status indicator lights 62a to 62d, and bumper switches 64a, 64b described later.

### <Safety Device 50>

As shown in FIGS. 2 to 5, the safety device 50 of the present embodiment includes two laser sensors 52a, 52b, two safety proximity sensors 58a, 58b, and a status monitor 105. The two laser sensors 52a, 52b are one example of a first sensor. The two safety proximity sensors 58a, 58b are one example of a second sensor. Note that the number of laser sensors 52a, 52b and the number of safety proximity sensors 58a, 58b are not limited to two, and may be one or three or more.

The two laser sensors 52a, 52b are attached to at least one of the AGV 20 or the robot 40. In this example, the two laser sensors 52a, 52b are attached to the housing 22 of the AGV 20. The laser sensor 52a is attached to the bottom at the corner between the front and right surfaces of the housing 22, and the laser sensor 52b is attached to the bottom at the corner between the back and left surfaces of the housing 22. In other words, the two laser sensors 52a, 52b are each disposed at two non-adjacent corners of the housing 22 in plan view. Note that the laser sensor 52b has the same structure as that of the laser sensor 52a. Thus, unless otherwise required, only the laser sensor 52a will be described hereinafter, and similar description of the laser sensor 52b will not be repeated.

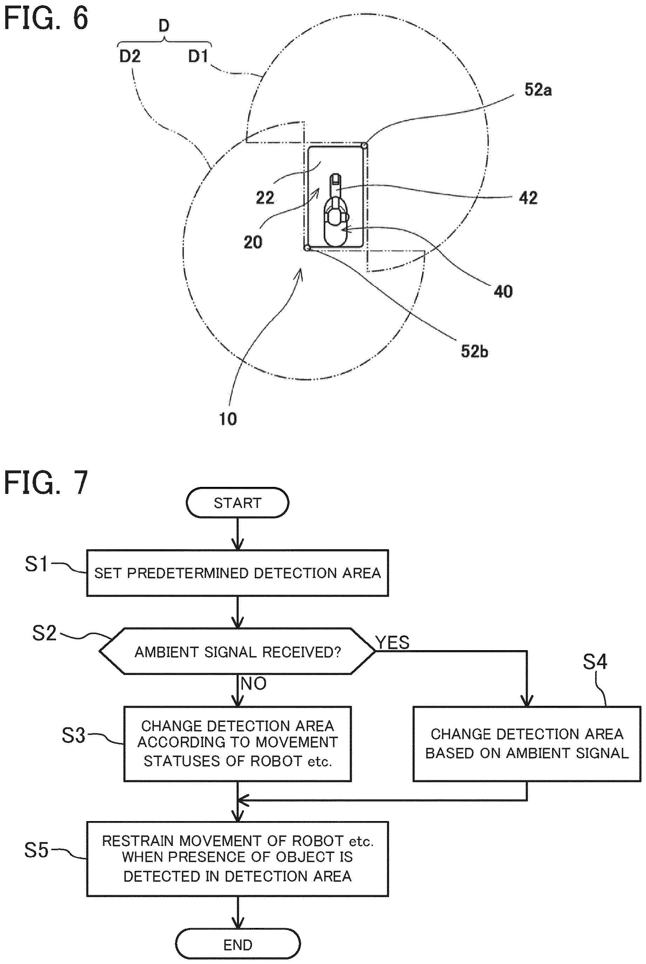

As shown in FIG. 5, each of the two laser sensors 52a, 52b has a light projector 53 that radially projects laser light with the light projector 53 itself positioned at the center in a later-described predetermined detectable area D (see FIG. 6), a light receiver 54 located adjacent to the light projector 53 to receive the laser light having contacted and reflected back from an object (e.g., another robot system 10 and the worker P as shown in FIG. 1) present in the predetermined detectable area D, and a detector 55 that detects the object present in the predetermined detectable area D based on a light reception status of the light receiver 54.

FIG. 6 is a schematic view showing the predetermined detectable area D set in the safety device 50. As shown in FIG. 6, the laser sensor 52a radially projects, using the light projector 53, the laser light with the laser sensor 52a itself positioned at the center. Since the laser sensor 52a is attached to the bottom at the corner between the front and right surfaces of the housing 22 of the AGV 20, there is an area which cannot be projected with the laser light due to interference by the housing 22. That is, the laser sensor 52a can radially project the laser light to an area of 270° from the front surface to the right surface of the housing 22 with the laser sensor 52a itself positioned at the center in plan view. Thus, the laser sensor 52a can detect an object present in a detectable area D1 indicated by a chain double-dashed line in FIG. 6.

Similarly, the laser sensor 52b radially projects, using the light projector 53, the laser light with the laser sensor 52b itself positioned at the center. Since the laser sensor 52b is attached to the bottom at the corner between the back and left surfaces of the housing 22 of the AGV 20, there is an area which cannot be projected with the laser light due to interference by the housing 22. That is, the laser sensor 52b can radially project the laser light to an area of 270° from the back surface to the left surface of the housing 22 with the laser sensor 52b itself positioned at the center in plan view. Thus, the laser sensor 52b can detect an object present in a detectable area D2 indicated by a chain double-dashed line in FIG. 6.

The detectable area D of the safety device 50 is a combined area of the detectable area D1 of the laser sensor 52a and the detectable area D2 of the laser sensor 52b. Note that as shown in FIG. 6, the detectable area D1 and the detectable area D2 partially overlap with each other in plan view.

Each of the two laser sensors 52a, 52b further includes an area setter 56 that sets, as a predetermined detection area, the entirety or part of the detectable area D. The area setter 56 changes the predetermined detection area based on an ambient signal regarding the periphery of the AGV 20 and the robot 40 from the outside. More specifically, the area setter 56 changes the predetermined detection area based on ambient signals output from the later-described safety proximity sensors 58a, 58b.

More specifically, the area setter 56 sets the predetermined detection area by masking part (i.e., portion for which no detection is required) of the detectable area D. In a case where there is no portion which needs to be masked, the entirety of the detectable area D is set as the predetermined detection area. Moreover, the area setter 56 changes the predetermined detection area by changing the masked portion of the detectable area D.

The area setter 56 may change the predetermined detection area according to movement statuses of the AGV 20 and the robot 40. Specifically, the area setter 56 receives the movement statuses of the AGV 20 and the robot 40 transmitted from the later-described status monitor 105, and changes the predetermined detection area according to the transmitted movement statuses. That is, the detector 55 detects an object present in the predetermined detection area set by the area setter 56 in this manner.

The two safety proximity sensors 58a, 58b detect the status of the periphery of the AGV 20 and the robot 40. More specifically, the safety proximity sensors 58a, 58b detect a predetermined work area of the robot 40, and outputs the ambient signal when detecting the predetermined work area. In the present embodiment, the predetermined work area of the robot 40 is an area where the shelves S and the conveyer C are located.

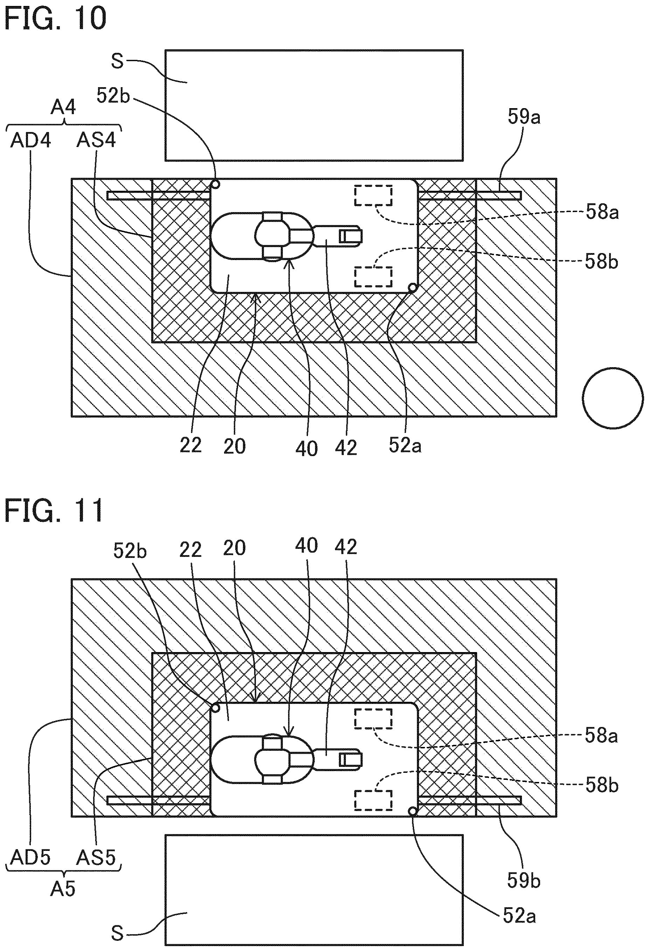

The two safety proximity sensors 58a, 58b have similar configurations. In the present embodiment, the two safety proximity sensors 58a, 58b are attached to the housing 22 of the AGV 20. More specifically, the two safety proximity sensors 58a, 58b are each disposed on the left and right sides on the front side of the bottom of the housing 22. The safety proximity sensor 58a, 58b detects the predetermined work area by sensing an aluminum tape (hereinafter referred to as an AL tape) 59a, 59b bonded to a predetermined position on the floor (see, e.g., FIGS. 10 and 11). The AL tape 59a, 59b is bonded to the floor in the vicinity of the predetermined work area, i.e., the area where the shelves S and the conveyer C are located. Thus, when the AGV 20 and the robot 40 approach the predetermined work area, the safety proximity sensor 58a, 58b senses the AL tape 59a, 59b, thereby detecting that the work area is present at the periphery of the AGV 20 and the robot 40. When detecting the predetermined work area, the safety proximity sensor 58a, 58b transmits the ambient signal as a detection signal to the laser sensor 52a, 52b via the status monitor 105.

The status monitor 105 monitors the movement statuses of the AGV 20 and the robot 40, and transmits the monitored movement statuses to the area setter 56 of the laser sensor 52a, 52b. More specifically, a detection value of a not-shown encoder is transmitted from the robot controller 100 to the status monitor 105. The encoder is disposed, for example, in the robot 40, and detects the rotating angle of each of the servo motors 110a to 110f and outputs the detection value to the robot controller 100. The status monitor 105 grasps and monitors the movement statuses of the AGV 20 and the robot 40 based on the detection value of the encoder transmitted from the robot controller 100. The movement statuses of the AGV 20 and the robot 40 are, for example, the stop status of each of the AGV 20 and the robot 40, the traveling speed of the AGV 20, the moving speed of the robot arm 42, and the position of the robot arm 42. The status monitor 105 monitors these movement statuses, and outputs a monitoring result (i.e., monitored movement statuses) to the area setters 56 with the monitoring result converted into a duplicated safety signal. The area setter 56 changes the predetermined detection area according to the safety signal sent from the status monitor 105 in this manner.

The status monitor 105 has a movement restrainer 106. The movement restrainer 106 restrains movement of at least one of the AGV 20 or the robot 40 when the laser sensor 52a, 52b detects the present of an object in the predetermined detection area. Specifically, when detecting the presence of an object in the predetermined detection area, the laser sensor 52a, 52b transmits a detection signal to the status monitor 105. When the status monitor 105 receives the detection signal of the laser sensor 52a, 52b, the movement restrainer 106 outputs, based on the detection signal, a command for restraining movement of at least one of the AGV 20 or the robot 40 (e.g., decelerating or stopping at least one of the AGV 20 or the robot 40) to the robot controller 100. The robot controller 100 restrains movement of the AGV 20 and the robot 40 based on the command from the status monitor 105.

Various signals, which include the ambient signals from the safety proximity sensors 58a, 58b, transmitted to and received by the laser sensors 52a, 52b and the status monitor 105 are so-called safety signals duplicated and having a self-diagnostic function. Thus, if some of these signals are failed, a proper signal is reliably transmitted and received.

Further, the safety device 50 includes the buzzer 60, the status indicator lights 62a to 62d, and the bumper switches 64a, 64b.

The buzzer 60 is attached to the corner between the front and upper surfaces of the housing 22 of the AGV 20. The buzzer 60 is attached so as to extend in the width direction of the housing 22. The buzzer 60 may generate warning sound to indicate danger when the laser sensor 52a, 52b detects the presence of an object in a later-described deceleration area AD1. Alternatively, the buzzer 60 may generate warning sound greater than that when the presence of an object is detected in the deceleration area AD1 to indicate danger when the laser sensor 52a, 52b detects the presence of an object in a stop area AS1.

The status indicator lights 62a to 62d are each attached to a center portion at the corner between the front and left surfaces of the housing 22 of the AGV 20, a center portion at the corner between the front and right surfaces of the housing 22, a center portion at the corner between the back and left surfaces of the housing 22, and a center portion at the corner between the back and right surfaces of the housing 22. Each of the status indicator lights 62a to 62d may be turned on (or blinked) when the laser sensor 52a, 52b detects the presence of an object in the later-described deceleration area AD1, thereby indicating danger. Moreover, when the laser sensor 52a, 52b detects the presence of an object in the stop area AS1, each of the status indicator lights 62a to 62d may be turned on (or rapidly blinked) in a color different from that when the presence of an object is detected in the deceleration area AD1, thereby indicating danger.

The bumper switch 64a is attached to the corner between the front and bottom surfaces of the housing 22 of the AGV 20, and extends in the width direction of the housing 22. The bumper switch 64b is attached to the corner between the back and bottom surfaces of the housing 22 of the AGV 20, and extends in the width direction of the housing 22. Each of the bumper switches 64a, 64b stops movement of the AGV 20 and the robot 40 when an object collides with the bumper switch 64a, 64b itself.

As shown in FIG. 7, in the robot system 10, movement of the AGV 20 and the robot 40 is controlled using the safety device 50. In such control, various predetermined detection areas may be set/changed in the laser sensors 52a, 52b. FIG. 7 is a flowchart showing a control method.

### <Detection Area A1>

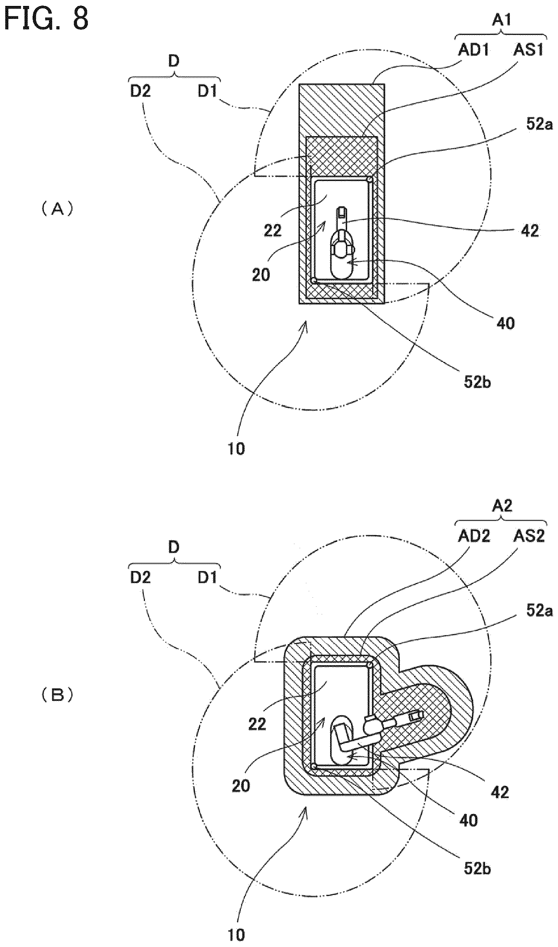

First, the area setter 56 of the laser sensor 52a, 52b sets the predetermined detection area (Step S1). For example, as shown in FIG. 8(A), a detection area A1 is set as a first detection area. FIGS. 8(A) and 8(B) are schematic views showing the predetermined detection area set in the safety device 50, and FIG. 8(A) is a schematic view showing the first detection area and FIG. 8(B) is a schematic view showing a second detection area.

The detection area A1 is set in a movement status in which the robot 40 does not move and the AGV 20 is traveling forward. The laser sensor 52a, 52b detects an object present in the detection area A1. Note that the detection area A1 is part of the detectable area D. In other words, the detection area A1 is included in the detectable area D.

Specifically, the area setter 56 sets the detection area A1 by masking part of the detectable area D. The detection area A1 is set so as to extend at least in the traveling direction of the AGV 20 from the AGV 20. In FIG. 8(A), the AGV 20 is traveling forward, and therefore, the detection area A1 extends forward of the AGV 20 from the AGV 20, and also extends slightly backward of the AGV 20 from the AGV 20. The detection area A1 is set in a rectangular shape in plan view. Note that as shown in the figure, the detection area A1 is set in a rectangular shape including the AGV 20 in plan view, and is slightly present on the right and left sides of the AGV 20.

As shown in FIG. 8(A), the area setter 56 can set the deceleration area AD1 and the stop area AS1 in the detection area A1. As shown in the figure, each of the deceleration area AD1 and the stop area AS1 is in a rectangular shape, and the deceleration area AD1 is set so as to include the stop area AS1.

When the laser sensor 52a, 52b detects the presence of an object in the deceleration area AD1, the detection signal thereof is transmitted from the laser sensor 52a, 52b to the movement restrainer 106. When receiving the detection signal from the laser sensor 52a, 52b, the movement restrainer 106 outputs a command for decelerating the traveling AGV 20 to the robot controller 100, thereby restraining movement of the AGV 20. When the laser sensor 52a, 52b detects the presence of an object in the stop area AS1, the detection signal thereof is transmitted from the laser sensor 52a, 52b to the movement restrainer 106. When receiving the detection signal from the laser sensor 52a, 52b, the movement restrainer 106 outputs a command for stopping the traveling AGV 20 to the robot controller 100, thereby restraining movement of the AGV 20. Note that when the presence of an object is detected in both the deceleration area AD1 and the stop area AS1, the movement restrainer 106 may stop the traveling AGV 20, thereby restraining movement of the AGV 20.

Subsequently, in Step S2, it is determined whether or not the status monitor 105 has received the ambient signal from the safety proximity sensor 58a, 58b. In a case where the status monitor 105 does not receive the ambient signal, the processing proceeds to Step S3.

### <Detection Area A2>

In Step S3, the area setter 56 changes the predetermined detection area according to the movement statuses of the AGV 20 and the robot 40 transmitted from the status monitor 105. Here, for example, the detection area A1 is changed to a detection area A2 (see FIG. 8(B)) as the second detection area. The detection area A2 is set in a movement status in which the AGV 20 is stopped and the robot 40 is moving. The laser sensor 52a, 52b detects an object present in the detection area A2. Note that the detection area A2 is part of the detectable area D. In other words, the detection area A2 is included in the detectable area D.

Specifically, the area setter 56 sets the detection area A2 by masking part of the detectable area D different from that in the case of the detection area A1. The detection area A2 is set so as to extend from the robot 40 to a movable area where at least the robot 40 is movable. In FIG. 8(B), the robot arm 42 extends rightward of the AGV 20, and therefore, the detection area A2 extends rightward of the AGV 20 so as to include the robot arm 42. Moreover, part of the detection area A2 other than the portion including the robot arm 42 in plan view is set in a rectangular shape including the housing 22 of the AGV 20.

As shown in FIG. 8(B), the area setter 56 can set a deceleration area AD2 and a stop area AS2 in the detection area A2. As shown in the figure, the deceleration area AD2 is set so as to include the stop area AS2.

Subsequently, in Step S5, when the presence of an object is detected in the detection area A2, the movement restrainer 106 restrains movement of the AGV 20 and the robot 40. Specifically, when the laser sensor 52a, 52b detects the presence of an object in the deceleration area AD2, the detection signal thereof is transmitted from the laser sensor 52a, 52b to the movement restrainer 106. When receiving the detection signal from the laser sensor 52a, 52b, the movement restrainer 106 outputs a command for decelerating the moving robot 40 to the robot controller 100, thereby restraining movement of the robot 40. When the laser sensor 52a, 52b detects the presence of an object in the stop area AS2, the detection signal thereof is transmitted from the laser sensor 52a, 52b to the movement restrainer 106. When receiving the detection signal from the laser sensor 52a, 52b, the movement restrainer 106 outputs a command for stopping the moving robot 40 to the robot controller 100, thereby restraining movement of the robot 40. Note that when the presence of an object is detected in both the deceleration area AD2 and the stop area AS2, the movement restrainer 106 may stop the robot 40, thereby restraining movement of the robot 40.

Note that movement of each of the buzzer 60, the status indicator lights 62a to 62d, and the bumper switches 64a, 64b is similar to that in the case of the detection area A1 described based on FIG. 8(A), and therefore, description thereof will not be repeated here. The same also applies to later-described detection areas A3 to A8.

### <Detection Area A3>

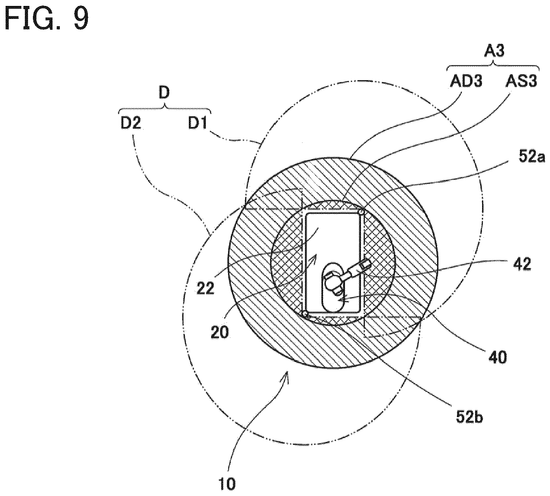

In Step S3, the area setter 56 can change the detection area A1 to the detection area A3 (see FIG. 9) as a third detection area. FIG. 9 is a schematic view showing the third detection area set in the safety device 50. The detection area A3 is set in a movement status in which the AGV 20 is traveling and the robot 40 is moving. As shown in the same figure, the area setter 56 sets the detection area A3 by masking part of the detectable area D different from those in the case of the detection areas A1, A2. The detection area A3 is set to a circular shape having the center overlapping with the center of the housing 22 of the AGV 20 in plan view.

As shown in FIG. 9, the area setter 56 can set a deceleration area AD3 and a stop area AS3 in the detection area A3. As shown in the figure, the deceleration area AD3 and the stop area AS3 are in concentric circular shapes, and the deceleration area AD3 is set so as to include the stop area AS3.

For example, when the AGV 20 is traveling and the robot 40 is moving, the area setter 56 may change the size of the detection area A3 (in other words, the sizes of the deceleration area AD3 and the stop area AS3) according to the moving speeds of the AGV 20 and the robot 40. For example, the area setter 56 may expand the detection area A3 when at least any of the AGV 20 and the robot 40 is moving at high speed.

Note that when the AGV 20 is traveling and the robot 40 is moving, the area setter 56 may change the shape of the detection area to the shape of the detection area A1 shown in FIG. 8(A) or the shape of the detection area A2 shown in FIG. 8(B) instead of the shape of the detection area A3 shown in FIG. 9.

In a case where the status monitor 105 has received, in Step S2, the ambient signal from the safety proximity sensor 58a, 58b, the processing proceeds to Step S4. In Step S4, the area setter 56 changes the predetermined detection area based on the ambient signal transmitted from the safety proximity sensor 58a, 58b via the status monitor 105. Here, as an example of a change in the predetermined detection area in Step S4, the detection areas A4 to A7 will be described with reference to FIGS. 10 to 13.

### <Detection Area A4>

FIG. 10 is a schematic view showing a fourth detection area set in the safety device 50. Note that the detectable area D is not shown in FIG. 10 and the same also applies to FIGS. 11 to 14 described later. The area setter 56 changes the detection area A1 to the detection area A4 as the fourth detection area based on the ambient signal from the safety proximity sensor 58a. More specifically, the area setter 56 sets the detection area A4 based not only on the ambient signal from the safety proximity sensor 58a but also the movement status of the AGV 20 from the status monitor 105.

The detection area A4 is set when the AGV 20 is stopped and the left safety proximity sensor 58a of the two safety proximity sensors 58a, 58b senses the predetermined AL tape 59a and outputs the ambient signal. That is, when the AGV 20 is stopped and the presence of the predetermined work area (in this example, the shelf S) is detected on the left side of the AGV 20 and the robot 40, the detection area A4 is set.

Specifically, the area setter 56 sets the detection area A4 by masking part of the detectable area different from that in the case of the detection area A1. More specifically, the area setter 56 sets the detection area A4 such that the detection area A4 does not overlap with the predetermined work area detected by the safety proximity sensor 58a. That is, in this example, the detection area A4 is set in such a manner that a portion (i.e., portion on the left side of the AGV 20) of the detectable area corresponding to the predetermined work area is masked. The detection area A4 set in this manner is in a rectangular shape in plan view. That is, the detection area A4 extends forward and backward of the AGV 20, and also extends rightward of the AGV 20.

As shown in FIG. 10, the area setter 56 can set a deceleration area AD4 and a stop area AS4 in the detection area A4, as in the detection area A1 etc. As shown in the figure, each of the deceleration area AD4 and the stop area AS4 is in a rectangular shape, and the deceleration area AD4 includes the stop area AS4 (except for the left outer edge). As described above, in the detection area A4, neither the deceleration area AD4 nor the stop area AS4 are set for the portion corresponding to the predetermined work area. The detection area A4 is set as described above, and therefore, the laser sensor 52a, 52b does not detect the predetermined work area (i.e., the presence of the shelf S). Thus, the robot 40 can properly perform a work in the predetermined work area without decelerating or stopping.

Subsequently, in Step S5, when the laser sensor 52a, 52b detects the presence of an object in the detection area A4, the movement restrainer 106 restrains movement of the robot 40, as in Step S5 described regarding the detection area A2.

### <Detection Area A5>

FIG. 11 is a schematic view showing a fifth detection area set in the safety device 50. The area setter 56 changes the detection area A1 to the detection area A5 as the fifth detection area based on the ambient signal from the safety proximity sensor 58b. More specifically, the area setter 56 sets the detection area A5 based not only on the ambient signal from the safety proximity sensor 58b but also the movement status of the AGV 20 from the status monitor 105.

The detection area A5 is set when the AGV 20 is stopped and the right safety proximity sensor 58b of the two safety proximity sensors 58a, 58b senses the predetermined AL tape 59b and outputs the ambient signal. That is, when the AGV 20 is stopped and the presence of the predetermined work area (in this example, the shelf S) is detected on the right side of the AGV 20 and the robot 40.

Specifically, the area setter 56 sets the detection area A5 by masking part of the detectable area different from that in the case of the detection area A1. More specifically, the area setter 56 sets the detection area A5 such that the detection area A5 does not overlap with the predetermined work area detected by the safety proximity sensor 58b. That is, in this example, the detection area A5 is set in such a manner that a portion (i.e., portion on the right side of the AGV 20) of the detectable area corresponding to the predetermined work area is masked. The detection area A5 set in this manner is in a rectangular shape in plan view. That is, the detection area A5 extends forward and backward of the AGV 20, and also extends leftward of the AGV 20.

As shown in FIG. 11, the area setter 56 can set a deceleration area AD5 and a stop area AS5 in the detection area A5, as in the detection area A1 etc. As shown in the figure, each of the deceleration area AD5 and the stop area AS5 is in a rectangular shape, and the deceleration area AD5 includes the stop area AS5 (except for the right outer edge). As described above, in the detection area A5, neither the deceleration area AD5 nor the stop area AS5 are set for the portion corresponding to the predetermined work area. The detection area A5 is set as described above, and therefore, the robot 40 can properly perform a work in the predetermined work area without decelerating or stopping, as in the detection area A4. Step S5 to be subsequently performed is similar to that in the case of the detection area A4.

### <Detection Area A6>

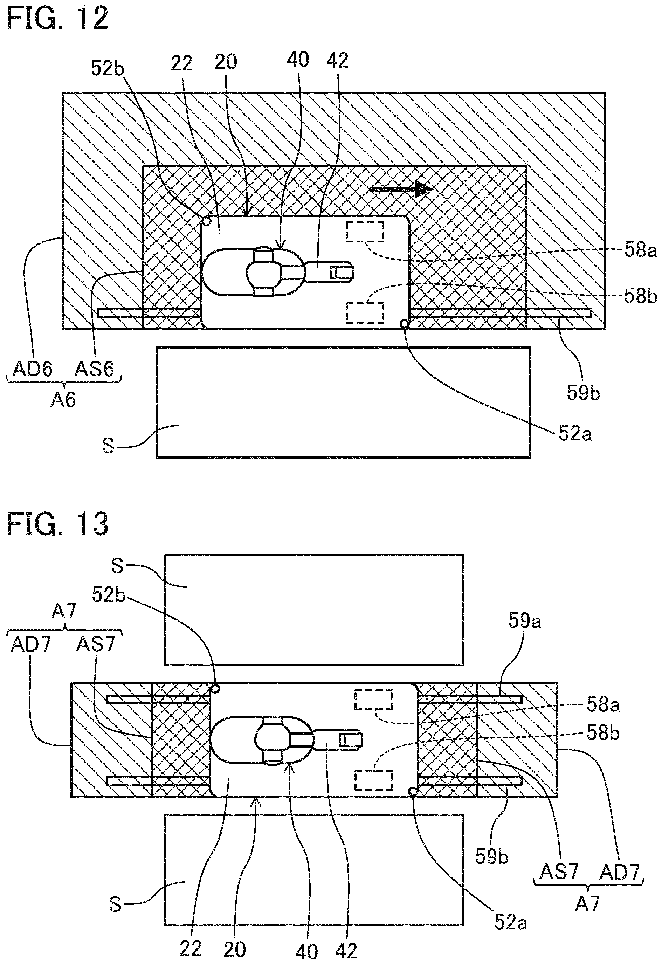

FIG. 12 is a schematic view showing a sixth detection area set in the safety device 50. The area setter 56 changes the detection area A1 to the detection area A6 as the sixth detection area based on the ambient signal from the safety proximity sensor 58b. More specifically, the area setter 56 sets the detection area A6 based not only on the ambient signal from the safety proximity sensor 58b but also the movement status of the AGV 20 from the status monitor 105.

The detection area A6 is set when the AGV 20 is traveling in the direction of an arrow shown in FIG. 12 and the right safety proximity sensor 58b of the two safety proximity sensors 58a, 58b senses the predetermined AL tape 59b and outputs the ambient signal. That is, when the AGV 20 is traveling and the presence of the predetermined work area (in this example, the shelf S) is detected on the right side of the AGV 20 and the robot 40, the detection area A5 is set. Both the detection areas A5, A6 are different from each other in that the detection area A5 is set when the AGV 20 is stopped while the detection area A6 is set when the AGV 20 is traveling.

Specifically, the area setter 56 sets the detection area A6 by masking part of the detectable area different from that in the case of the detection area A1. More specifically, the area setter 56 sets the detection area A6 such that the detection area A6 does not overlap with the predetermined work area detected by the safety proximity sensor 58b. That is, in this example, the detection area A6 is set in such a manner that a portion (i.e., portion on the right side of the AGV 20) of the detectable area corresponding to the predetermined work area is masked. The detection area A6 set in this manner is in a rectangular shape in plan view. That is, the detection area A6 extends forward and backward of the AGV 20, and also extends leftward of the AGV 20. Moreover, the AGV 20 is traveling forward, and therefore, the detection area A6 is set such that the detection area on the front side of the AGV 20 is larger than that in the case of the detection area A5.

As shown in FIG. 12, the area setter 56 can set a deceleration area AD6 and a stop area AS6 in the detection area A6, as in the detection area A5. As shown in the figure, each of the deceleration area AD6 and the stop area AS6 is in a rectangular shape, and the deceleration area AD6 includes the stop area AS6 (except for the right outer edge). In this example, the stop area AS6 on the front side of the AGV 20 is set larger than that in the case of the detection area A5. As described above, in the detection area A6, neither the deceleration area AD6 nor the stop area AS6 are set for the portion corresponding to the predetermined work area, as in the detection area A5. Thus, the robot 40 can properly perform a work in the predetermined work area without decelerating or stopping. Since the portion of the detection area A6 on the front side of the AGV 20 is larger than that in the case of the detection area A5, the presence of an object on the front side of the AGV 20 can be instantaneously detected. Step S5 to be subsequently performed is similar to that in the case of the detection area A4.

### <Detection Area A7>

FIG. 13 is a schematic view showing a seventh detection area set in the safety device 50. The area setter 56 changes the detection area A1 to the detection area A7 as the seventh detection area based on the ambient signals from the two safety proximity sensors 58a, 58b. More specifically, the area setter 56 sets the detection area A7 based not only on the ambient signals from the two safety proximity sensors 58a, 58b but also the movement status of the AGV 20 from the status monitor 105.

The detection area A7 is set when the AGV 20 is stopped and the two safety proximity sensors 58a, 58b each sense the predetermined AL tapes 59a, 59b and output the ambient signals. That is, when the AGV 20 is stopped and the presence of the predetermined work areas (in this example, the shelves S) are detected on the right and left sides of the AGV 20 and the robot 40, the detection area A7 is set.

Specifically, the area setter 56 sets the detection area A7 by masking part of the detectable area different from that in the case of the detection area A1. More specifically, the area setter 56 sets the detection area A7 such that the detection area A7 does not overlap with the two predetermined work areas detected by the two safety proximity sensors 58a, 58b. That is, in this example, the detection area A7 is set in such a manner that portions (i.e., portions on the right and left sides of the AGV 20) of the detectable area corresponding to the two right and left predetermined work areas are masked. The detection area A7 set in this manner is in a rectangular shape in plan view. That is, the detection area A7 extends forward and backward of the AGV 20.

As shown in FIG. 13, the area setter 56 can set a deceleration area AD7 and a stop area AS7 in the detection area A7, as in the detection area A1 etc. As shown in the figure, each of the deceleration area AD7 and the stop area AS7 is in a rectangular shape, and the deceleration area AD7 includes the stop area AS7 (except for the right and left outer edges). As described above, in the detection area A7, neither the deceleration area AD7 nor the stop area AS7 are set for the portions corresponding to the two right and left predetermined work areas. Thus, the robot 40 can properly perform a work in the two right and left predetermined work areas without decelerating or stopping. Step S5 to be subsequently performed is similar to that in the case of the detection area A4.

As described above, the safety device 50 of the embodiment is disposed in the robot system 10 having the AGV 20 (travel device) and the robot 40 disposed on the AGV 20. The safety device 50 includes the laser sensors 52a, 52b (first sensor) and the movement restrainer 106. The laser sensors 52a, 52b are attached to at least one of the AGV 20 or the robot 40, is set with the predetermined detection area A1 to A7, and detects an object present in the predetermined detection area A1 to A7. The movement restrainer 106 restrains movement of at least one of the AGV 20 or the robot 40 when the laser sensor 52a, 52b detects the presence of the object in the predetermined detection area A1 to A7. The laser sensor 52a, 52b changes the predetermined detection area A1 to A7 based on the ambient signal regarding the periphery of the AGV 20 and the robot 40 from the outside.

The robot system 10 of the above-described embodiment includes the AGV 20 (travel device), the robot 40 disposed on the AGV 20, and the safety device 50.

The control method of the above-described embodiment is the method for controlling movement of the AGV 20 (travel device) and the robot 40 disposed on the AGV 20 in the robot system 10 including the AGV 20, the robot 40, and the laser sensors 52a, 52b (first sensor) attached to at least one of the AGV 20 or the robot 40, set with the predetermined detection area A1 to A7, and detecting an object present in the predetermined detection area A1 to A7. The control method includes setting the predetermined detection area A1 to A7 of the laser sensor 52a, 52b, changing the predetermined detection area A1 to A7 of the laser sensor 52a, 52b based on the ambient signal regarding the periphery of the AGV 20 and the robot 40, and restraining movement of at least one of the AGV 20 or the robot 40 when the laser sensor 52a, 52b detects the presence of the object in the predetermined detection area A1 to A7.

According to these configurations, when the laser sensor 52a, 52b detects the presence of an object in the predetermined detection area A1 to A7, movement of at least one of the AGV 20 or the robot 40 is restrained (e.g., decelerated or stopped), and therefore, for example, collision of the AGV 20 with the object can be prevented in advance. The predetermined detection area A1 to A7 is changed based on the ambient signal regarding the periphery of the AGV 20 and the robot 40 from the outside. Thus, the predetermined detection area A1 to A7 can be changed such that for example, an object required for a work performed by the robot 40 among an object and a person surrounding the AGV 20 etc. is not detected. With this configuration, the AGV 20 and the robot 40 can properly perform the predetermined work without unnecessarily decelerating or stopping.

In the safety device 50 of the above-described embodiment, the laser sensor 52a, 52b (first sensor) sets the predetermined detection area A1 to A7 by masking part of the predetermined detectable area D, and changes the predetermined detection area A1 to A7 by changing the masked portion of the predetermined detectable area D.

According to the above-described configuration, the predetermined detection area A1 to A7 is changed in such a manner that the masked portion of the detectable area D is changed, and therefore, the detection area A1 to A7 can be easily changed.

In the safety device 50 of the above-described embodiment, the ambient signal is duplicated.

According to the above-described configuration, even if some of the ambient signals are failed, a normal ambient signal is reliably transmitted and received. Thus, the predetermined detection area A1 to A7 can be more reliably changed based on the ambient signal.

The safety device 50 of the above-described embodiment further includes the safety proximity sensors 58a, 58b (second sensor) detecting the predetermined work area for the robot 40 and outputting the ambient signal when detecting the predetermined work area.

According to the above-described configuration, the ambient signal is a signal regarding the predetermined work area (in this example, the shelf S) for the AGV 20 and the robot 40. Thus, the predetermined detection area A1 to A7 can be changed such that the predetermined work area is not detected by the laser sensor 52a, 52b. With this configuration, the robot 40 etc. can properly perform a work in the predetermined work area.

In the safety device 50 of the above-described embodiment, when the ambient signal is output from the safety proximity sensor 58a, 58b (second sensor), the laser sensor 52a, 52b (first sensor) changes the predetermined detection area A1 to A7 such that the predetermined detection area A1 to A7 does not overlap with the predetermined work area.

According to the above-described configuration, the predetermined detection area A1 to A7 is changed so as not to overlap with the predetermined work area detected by the safety proximity sensor 58a, 58b, and therefore, detection of the predetermined work area by the laser sensor 52a, 52b can be reliably prevented.

In the safety device 50 of the above-described embodiment, the second sensor is the safety proximity sensor 58a, 58b.

According to the above-described configuration, the ambient signal can be output as the safety signal.

The safety device 50 of the above-described embodiment includes the laser sensors 52a, 52b attached to at least one of the AGV 20 (travel device) or the robot 40 disposed on the AGV 20, set with the predetermined detection areas A1 to A7 with reference to the positions of the laser sensors 52a, 52b themselves, and disposed for detecting an object present in the predetermined detection areas A1 to A7, and the movement restrainer 106 restraining movement of at least one of the AGV 20 or the robot 40 when the laser sensor 52a, 52b detects the presence of an object in the predetermined detection area A1 to A7. The laser sensor 52a, 52b includes the area setter 56 changing the predetermined detection area A1 to A7 according to the movement statuses of the AGV 20 and the robot 40.

According to the above-described configuration, the safety device 50 can restrain movement of at least one of the AGV 20 or the robot 40 according to the movement statuses of the AGV 20 and the robot 40.

The area setter 56 can switch the detection area between the first detection area as the predetermined detection area A1 extending at least in the traveling direction of the AGV 20 from the AGV 20 when the robot 40 does not move and the AGV 20 is traveling and the second detection area as the predetermined detection area A2 extending toward the movable area where at least the robot 40 is movable from the robot 40 when the AGV 20 does not travel and the robot 40 is moving.

According to the above-described configuration, the safety device 50 can efficiently restrain movement of the AGV 20 and the robot 40.

The area setter 56 can change the predetermined detection area A3 to the third detection area when the AGV 20 is traveling and the robot 40 is moving.

The area setter 56 can set at least any of the deceleration area and the stop area in the predetermined detection area A1 to A7, and the movement restrainer 106 decelerates movement of the AGV 20 and the robot 40 when the laser sensor 52a, 52b detects the presence of an object in the deceleration area and stops movement of the AGV 20 and the robot 40 when the laser sensor 52a, 52b detects the presence of an object in the stop area.

According to the above-described configuration, the safety device 50 can properly restrain movement of the AGV 20 and the robot 40.

The first sensor is the laser sensor 52a, 52b having the light projector 53 radially projecting the laser light with the light projector 53 itself positioned at the center in the predetermined detectable area D including the predetermined detection area, the light receiver 54 located adjacent to the light projector 53 to receive the laser light having contacted and reflected back from an object present in the predetermined detectable area D, and the detector 55 detecting the object present in the predetermined detectable area D based on the light reception status of the light receiver 54. The area setter 56 changes the predetermined detection area A1 to A7 by changing the masked portion of the predetermined detectable area D.

The AGV 20 has the rectangular parallelepiped housing 22, the driver 24 disposed in the housing 22, and the drive wheels 26a, 26b to be driven by the driver 24. In plan view, the laser sensors 52a, 52b are each disposed at the two non-adjacent corners of the housing 22.

According to the above-described configuration, the safety device 50 can obtain the sufficiently-large detectable area D without disposing the laser sensors 52a, 52b more than necessary.

The control method of the above-described embodiment is the method for controlling movement of the AGV 20 and the robot 40 using the safety device 50. The control method includes setting the predetermined detection area A1 to A7, changing the predetermined detection area A1 to A7 by the area setter 56 according to the movement statuses of the AGV 20 and the robot 40, and restraining movement of the AGV 20 and the robot 40 by the movement restrainer 106 when the laser sensor 52a, 52b (first sensor) detects the presence of an object in the predetermined detection area A1 to A7.

According to the above-described configuration, movement of the AGV 20 and the robot 40 can be restrained using the safety device 50 according to the movement statuses of the AGV 20 and the robot 40.

### <<Other Embodiments>>

The embodiment has been described above as an example of the technique disclosed in the present application. However, the technique in the present disclosure is not limited to above, and is also applicable to embodiments to which changes, replacements, additions, omissions, etc. are made as necessary. The components described above in the embodiment may be combined to form a new embodiment. The components shown in the attached drawings and described in detail may include not only components essential for solving the problems, but also components that are provided for describing an example of the above-described technique and are not essential for solving the problems. Thus, description of these non-essential components in detail and illustration of these components in the attached drawings shall not be interpreted that these non-essential components are essential.

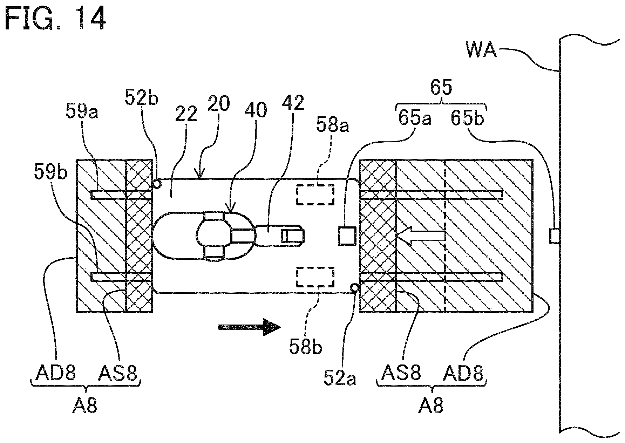

For example, in Step S4 described above, the detection area may be changed to the detection area A8 as an eighth detection area shown in FIG. 14. FIG. 14 is a schematic view showing the eighth detection area set in the safety device 50 according to another embodiment. Note that in FIG. 14, the detectable area D is not shown either.

The area setter 56 changes the detection area A1 to the detection area A8 based on the ambient signals from the two safety proximity sensors 58a, 58b. More specifically, the area setter 56 sets the detection area A8 based not only on the ambient signals from the two safety proximity sensors 58a, 58b but also the movement status of the AGV 20 from the status monitor 105. Unlike the above-described embodiment, the ambient signals from the two safety proximity sensors 58a, 58b are signals indicating that the presence of a predetermined wall WA has been detected. That is, the detection area A8 is set in a case where, e.g., the AGV 20 approaches the predetermined wall WAin the state of the detection area A1 when the AGV 20 is normally traveling forward. The two AL tapes 59a, 59b parallel with each other are bonded to the floor in the vicinity of the predetermined wall WA. When the AGV 20 and the robot 40 approach the predetermined wall WA, the safety proximity sensors 58a, 58b sense the two AL tapes 59a, 59b, thereby detecting the presence of the predetermined wall WA. Then, the safety proximity sensors 58a, 58b output the ambient signals indicating that the presence of the predetermined wall WA has been detected. As described above, the detection area A8 is set in a case where the AGV 20 travels at the closest possible position to a predetermined object (in the example, wall WA). Note that as in the detection area A1, a deceleration area AD8 and a stop area AS8 are set in the detection area A8.

Specifically, the area setter 56 sets the detection area A8 by masking part of the detectable area different from that in the case of the detection area A1. More specifically, the area setter 56 sets the detection area A8 such that the stop area AS8 of the detection area A8 set on the front side does not overlap with the predetermined wall WA detected by the two safety proximity sensors 58a, 58b. Much more specifically, the detection area A8 is set in such a manner that the front outer edge of the stop area AS8 on the front side is shifted backward as compared to that in the case of the detection area A1 (see a white arrow shown in FIG. 14). That is, the detection area A8 is set so as to extend in a rectangular shape forward and backward of the AGV 20 as in the detection area A1, and is set such that the stop area AS8 on the front side is smaller than that in the case of the detection area A1.

The detection area A8 is set as described above such that the stop area AS8 on the front side is narrowed backward as compared to that in the case of the detection area A1 upon normal traveling, and therefore, the overlap of the stop area AS8 with the predetermined wall WA when the AGV 20 approaches the predetermined wall WA can be reduced. Thus, the AGV 20 is decelerated, but is not stopped. Consequently, the AGV 20 can approach the predetermined wall WA to the extent possible. With this configuration, the AGV 20 and the robot 40 can properly perform a work.

In the safety device 50, the predetermined wall WA may be detected using a contactless safety switch 65 instead of the safety proximity sensors 58a, 58b, as shown in FIG. 14. In this case, the AL tapes 59a, 59b are omitted. The contactless safety switch 65 has a master 65a and a slave 65b. The master 65a is attached, for example, to the housing 22 of the AGV 20, and the slave 65b is attached to the predetermined wall WA. In this case, when the AGV 20 approaches the predetermined wall WA, the master 65a receives a predetermined signal from the slave 65b, thereby detecting the presence of the predetermined wall WA. Then, the master 65a outputs an ambient signal indicating that the presence of the predetermined wall WA has been detected. In this configuration, the master 65a and the slave 65b can be relatively easily attached as compared to the AL tapes 59a, 59b, and the degree of freedom in an attachment position is relatively high.

In the above-described embodiment, the predetermined work area may be detected using the above-described contactless safety switch instead of the safety proximity sensors 58a, 58b. In this case, for example, the master is attached to the housing 22 of the AGV 20, and the slave is attached to the shelf S.

In the above-described embodiment, the AL tapes 59a, 59b are merely one example, and for example, a tape made of metal other than aluminum may be used.

In the above-described embodiment, the ambient signal is not necessarily the duplicated signal.

In the above-described embodiment, the safety signal transmitted to and received by the safety device 50 may be of a wireless type.

In the above-described embodiment, the shape of each of the detection areas A1 to A7 may be a shape other than the rectangular shape, and for example, may be an oval shape.

In the above-described embodiment, the predetermined work area detected by the safety proximity sensor 58a, 58b may be the conveyer C other than the shelf S or other objects.

In the above-described embodiment, the laser sensors 52a, 52b are not necessarily attached to the AGV 20, and may be attached to the robot 40. In this case, the laser sensors 52a, 52b are attached, for example, to the base 41. Alternatively, the laser sensors 52a, 52b may be attached to both the AGV 20 and the robot 40.

In the above-described embodiment, the case where the housing 22 is in the rectangular parallelepiped shape and the laser sensors 52a, 52b are each disposed at the two non-adjacent corners of the housing 22 in plan view has been described. However, the present invention is not limited to this case, and the housing 22 may be in a polygonal shape other than the rectangular parallelepiped shape or other shapes. For example, only one laser sensor may be located at the center of the upper surface of the housing 22. One laser sensor or three or more laser sensors may be attached to the housing 22. The laser sensor may be attached to the robot 40.

In the above-described embodiment, the case where the area setter 56 sets the deceleration area AD1 to AD7 and the stop area AS1 to AS7 in the detection area A1 to A7 has been described. However, the present invention is not limited to this case, and the area setter 56 is only required to set at least any of the deceleration area and the stop area in the predetermined detection area.

In the above-described embodiment, the case where the first sensor is the so-called reflective laser sensor 52a, 52b has been described. However, the present invention is not limited to this case, and the first sensor may be a so-called transmissive laser sensor that cooperates with a sensor attached to, e.g., an outer wall or other sensors.

In the above-described embodiment, the case where the robot 40 has the six articulated shafts JT1 to JT6 has been described. However, the present invention is not limited to this case, and the robot 40 may be a vertical articulated robot having at least one articulated shaft other than the six articulated shafts. Alternatively, the robot 40 may be a two-arm robot, a horizontal articulated robot, or other robots.

## Claims

1. A safety device disposed in a robot system having a travel device and a robot disposed on the travel device, comprising:
a first sensor attached to at least one of the travel device or the robot, set with a predetermined detection area, and detecting an object present in the predetermined detection area; and
a movement restrainer restraining movement of at least one of the travel device or the robot when the first sensor detects the presence of the object in the predetermined detection area,
wherein the first sensor changes the predetermined detection area based on an ambient signal regarding a periphery of the travel device and the robot from an outside.

2. The safety device of claim 1, wherein
the first sensor sets the predetermined detection area by masking part of a predetermined detectable area, and changes the predetermined detection area by changing a masked portion of the predetermined detectable area.

3. The safety device of claim 1 or 2, wherein
the ambient signal is duplicated.

4. The safety device of any one of claims 1 to 3, further comprising:
a second sensor detecting a predetermined work area for the robot and outputting the ambient signal when detecting the predetermined work area.

5. The safety device of claim 4, wherein
when the ambient signal is output from the second sensor, the first sensor changes the predetermined detection area such that the predetermined detection area does not overlap with the predetermined work area.

6. The safety device of claim 4 or 5, wherein
the second sensor is a safety proximity sensor or a contactless safety switch.

7. A robot system comprising:
a travel device;
a robot disposed on the travel device; and
the safety device of any one of claims 1 to 6.

8. A control method for controlling movement of a travel device and a robot disposed on the travel device in a robot system including the travel device, the robot, and a first sensor attached to at least one of the travel device or the robot, set with a predetermined detection area, and detecting an object present in the predetermined detection area, comprising:
setting the predetermined detection area of the first sensor;
changing the predetermined detection area of the first sensor based on an ambient signal regarding a periphery of the travel device and the robot; and
restraining movement of at least one of the travel device or the robot when the first sensor detects the presence of the object in the predetermined detection area.
